Europäisches Patentamt

European Patent Office

Office européen des brevets

(19)

(11) Veröffentlichungsnummer : **0 038 341**
**B1**

(12) # EUROPÄISCHE PATENTSCHRIFT

(45) Veröffentlichungstag der Patentschrift :
11.05.83

(21) Anmeldenummer : 80902054.8

(22) Anmeldetag : 24.10.80

(86) Internationale Anmeldenummer :
PCT/DE 80/00160

(87) Internationale Veröffentlichungsnummer :
WO WO/81012 (14.05.81 Gazettee 81/12)

(51) Int. Cl.³ : **B 01 J 8/20**, B 01 D 3/24

(54) **MEHRSTUFIGE SÄULENKASKADE MIT RÜHRERLOSEN UMLAUFKAMMERN FÜR HOMOGENE FLÜSSIGE ODER GASFÖRMIGE SYSTEME.**

(30) Priorität : 02.11.79 DE 2944329

(43) Veröffentlichungstag der Anmeldung :
28.10.81 Patentblatt 81/43

(45) Bekanntmachung des Hinweises auf die Patenterteilung : 11.05.83 Patentblatt 83/19

(84) Benannte Vertragsstaaten :
FR GB NL

(56) Entgegenhaltungen :
DE A 2 355 106
DE A 2 518 975
DE B 1 035 097
DE B 1 042 546
DE C 1 542 378
FR A 2 200 045
FR A 2 380 804
GB A 1 000 553

(73) Patentinhaber : DYNAMIT NOBEL AKTIENGESELL-SCHAFT
Patentabteilung Postfach 1209
D-5210 Troisdorf, Bez. Köln (DE)

(72) Erfinder : SCHREIBER, Georg
Kiefernweg 7
D-5000 Köln 50 (DE)

## Mehrstufige Säulenkaskade mit rührerlosen Umlaufkammern für homogene flüssige oder gasförmige Systeme

Die Rührkesselkaskade ist die klassische Einrichtung für kontinuierlich durchgeführte chemische Reaktionen. Sie besteht aus einer Reihe hintereinander angeordneter, kontinuierlich durchflossener Behälter, deren Inhalt jeweils intensiv gerührt wird, um in ihnen eine ideale Durchmischung zu erreichen. Nachteilig ist hierbei der Aufwand für die einzelnen Behälter, insbesondere bei höheren Drücken und Temperaturen, deren Aufstellung, die Rührerantriebe und die Mess- und Regeleinrichtungen der einzelnen Behälter. Günstiger in dieser Hinsicht sind in eine Mehrzahl von Reaktionsstufen unterteilte Säulen, sogenannte mehrstufige Säulenkaskaden. Bei diesen wird eine möglichst ideale Durchmischung durch intensives Rühren in den einzelnen Stufen oder Kammern und eine möglichst kleine Vermischung zwischen diesen angestrebt, da die Rückvermischung zwischen den Stufen in der Regel den Gesamtwirkungsgrad erniedrigt.

Eine solche Säulenkaskade für Reaktionen in homogener flüssiger Phase besteht z. B. aus einem Rohr, das durch Zwischenwände in gleich große Kammern unterteilt ist. Der Abstand der Zwischenwände voneinander ist etwa gleich dem Rohrdurchmesser. Die Rührer für die einzelnen Kammern sind auf einer gemeinsamen zentralen Welle befestigt, die an den Rohrenden gelagert ist. Die Flüssigkeit tritt von Kammer zu Kammer entweder durch die Aussparung für die Rührerwelle oder durch zusätzliche Löcher in den Zwischenwänden über. Dieser Kammerreaktor kann in beliebiger Orientierung im Raum, d. h. vertikal, horizontal oder auch schräg angeordnet betrieben werden. Auch dieser Kammerreaktor besitzt aber die Nachteile eines langen Rührers mit dessen Antriebs-, Abdichtungs-, Betriebs- und Montageproblemen. Außerdem sind in den rechtwinkligen Kammern Toträume nicht zu verhindern.

Es wurde daher nach einer rührerlosen und trotzdem gut durchmischten Säulenkaskade gesucht. Bei heterogenen Zwei- oder Mehrphasensystemen können zum Durchmischen der z. B. flüssigen Phase bzw. Phasen Wirbelschichten angewendet werden, bei denen Feststoffpartikel durch einen Gegenstrom der fluiden Phase intensiv bewegt werden und dadurch eine gute Gesamtdurchmischung ermöglichen. Mehrere solcher Wirbelkammern werden zu einer Reaktorkaskade übereinander in der Säule angeordnet.

Eine sich drehende Wirbelschicht ist in der DE-A-25 18 975 für ein heterogenes Mehrphasensystem beschrieben, bei dem Flüssigkeit die kontinuierliche und Feststoff und/oder Gas die disperse Phase bilden. Benutzt wird dafür eine zumindest im wesentlichen vertikal angeordnete Kolonne oder Säule mit wenigstens zwei im Abstand übereinander und entgegengesetzt zueinander gegenüber der Horizontalen geneigt angeordneten Böden, die im Bereich ihres unteren und oberen Endes wenigstens je eine den Raum oberhalb des Bodens mit demjenigen unterhalb des Bodens verbindende Einrichtung aufweisen. Die verbindende Einrichtung kann z. B. eine außen an der Säulenwand angebrachte Umgehungsleitung sein, welche die Räume zu beiden Seiten der Böden miteinander verbindet und dadurch ein gesteuertes Überströmen des Massenstromes in die angrenzende Zelle oder Kammer ermöglicht. Bevorzugt sind die verbindenden Einrichtungen jedoch als wenigstens je ein Durchlaß, z. B. in Form eines Schlitzes, Spaltes oder Loches, am Rand der geneigten Böden, d. h. unmittelbar an der Innenwand der Säule oder auch in gewissem Abstand von dieser innerhalb der Böden angeordnet.

An jedem Boden bilden sich bei einem heterogen Mehrphasensystem zwei Anreicherungszonen aus, nämlich eine oberhalb des Bodens, insbesondere in dessen unteren Bereich, für die schwerere Phase, und eine andere unterhalb des Bodens, insbesondere in dessen oberen Bereich, für die leichtere Phase. Aus den Anreicherungszonen strömen die schwerere bzw. leichtere Phase über die verbindende Einrichtung zur jeweils anderen Bodenseite und nehmen an der dort auftretenden Wirbelbewegung teil. Die Energie zum Erzeugen und Aufrechterhalten der sich drehenden Wirbelschicht liefert hier das Erdschwerefeld aufgrund der Unterschiede der mittleren Dichten des heterogenen Systems in diesen beiden Anreicherungszonen. Sofern die Dichteunterschiede des heterogenen Systems so gering sind, daß die Energie aufgrund des Erdschwerefeldes allein eine hinreichend intensive Wirbelbewegung nicht gewährleistet, kann zusätzliche Energie der für den Transport des heterogenen Massenstroms erforderlichen Pumparbeit entnommen werden, wobei der von der leichteren Phase beim Übertritt in den Raum oberhalb der Böden zu überwindende Strömungswiderstand vorzugsweise erheblich größer ist als derjenige, der von der schwereren Phase beim Übertritt in den Raum unterhalb der Böden zu überwinden ist. Auch bei kleinen Dichteunterschieden liegt aber immer ein heterogenes System vor, bei dem in der flüssigen Phase eine feste und/oder gasförmige Phase dispergiert ist.

Bei homogenen Systemen, d. h. reinen Flüssigkeiten oder reinen Gasen ist keine disperse Phase anderen Aggregatzustandes vorhanden, um eine Wirbelschicht als Mittel zur Vermischung in dem homogenen System aufzubauen. Der Erfindung liegt die Aufgabe zugrunde, auch bei solchen homogenen Systemen eine gute Durchmischung der Flüssigkeit oder des Gases in einer Säulenkaskade ohne mechanisch bewegte Teile zu erreichen, wobei die Rückvermischung zwischen den einzelnen Stufen oder Kammern der Säule möglichst klein sein soll. Bei der Flüssigkeit oder dem Gas kann es sich um einen chemisch einheitlichen Stoff oder auch ein Gemisch verschiedener Stoffe handeln, die durch chemische Reaktionen und/oder physikalische Prozesse Änderungen erfahren sollen. Bei der chemischen Reaktion kann es sich beispielsweise um Hydrolysen, z. B. die von Dimethylterephthalat zu Terephthalsäure, handeln. Als physikalische Prozesse kommen z. B. Lösungsvorgänge in Frage, um eine Flüssigkeit in einer anderen aufzulösen und nicht nur zu dispergieren. Dabei geht bevorzugt ein anfängliches Zwei- oder Mehrphasensystem in ein Einphasensystem oder umgekehrt über. Auch eine Reaktion in einem Einphasensystem ohne Phasenänderung ist möglich. Von besonderer Bedeutung sind die Anwendungsfälle, in denen zumindest während einer gewissen Zeitspanne der jeweils ablaufenden chemischen Reaktion oder des physikalischen Prozesses im homogenen System keine Dichteunterschiede existieren. Bei den homogenen Systemen handelt es sich insbesondere um Flüssigkeiten.

Diese Aufgabe wird erfindungsgemäß entsprechend dem Anspruch 1 gelöst. Der Mischeffekt wird hierbei durch den Treibstrahl erreicht, der einerseits die Energie für die sich drehende Wirbelbewegung des homogenen Systems liefert und andererseits durch die Ansaugung und Vermischung mit einem aus der — in Durchströmrichtung der Säulenkaskade betrachtet — nächsten Kammer entnommenen weiteren Fluidstrom, sei es Flüssigkeit oder Gas, zu einer nachstehend noch näher erläuterten Schlaufenströmung ähnlich einem Schlaufen- oder Kreislaufreaktor führt. Dieser vom Treibstrahl angesaugte weitere Fluidstrom wird zumindest im wesentlichen wieder unmittelbar in diejenige Kammer, aus welcher er entnommen wurde, zurückgeführt, so daß er an der sich drehenden Wirbelbewegung in der vorhergehenden, d. h. stromaufwärts gelegenen Kammer allenfalls in einem sehr geringen Maße teilnimmt. Dadurch ist in den einzelnen Kammern eine gute Durchmischung mit einer möglichst kleinen Rückvermischung zwischen den Kammern gewährleistet. Die Wirbelbewegung, auch Kreislauf- oder Umlaufströmung genannt, wird ohne mechanisch bewegte Teile, d. h. in rührerlosen Umlaufkammern erreicht. Die für die Bewegung des Treibstrahls erforderliche Energie wird von einer Pump-, Verdichtereinrichtung od. dgl. aufgebracht, welche das Fluid vorzugsweise durch die mehrstufige Säulenkaskade mit rührerlosen Umlaufkammern aufgrund eines entsprechenden Druckgefälles hindurchdrückt, ggf. aber auch z. B. aus dieser absaugen kann.

Die Funktion der erfindungsgemäß betriebenen Säulenkaskade ist lageunabhängig. In der Regel wird sie in vertikaler Position betrieben, kann aber auch liegend oder geneigt angeordnet werden. Die beiden verbindenden Einrichtungen jedes geneigten Bodens können in bekannter Weise als z. B. außen an der Säulenwand angebrachte Umgehungsleitungen ausgebildet sein, welche die Räume zu beiden Seiten der Böden miteinander verbinden. Bevorzugt sind sie jedoch als wenigstens je ein Durchlaß, z. B. in Form eines Schlitzes, Spaltes oder Loches, am Rand der geneigten Böden, d. h. unmittelbar an der Innenwand der Säule oder auch in gewissem Abstand von dieser innerhalb der Böden ausgebildet.

Sofern bei vertikaler Anordnung der Säule mit von oben nach unten hindurchgeleitetem Fluidstrom die Austrittsöffnung der dem oberen Endbereich der Böden zugeordneten verbindenden Einrichtung in dem Raum oberhalb der Böden nicht seitlich in der Säulenwand, sondern in den Böden selbst ausgebildet sind, indem diese z. B. mit einem Durchlaß am Rand versehen sind, kann die Gefahr bestehen, daß der von oben gegen die Böden geleitete Treibstrahl im Bereich dieser Austrittsöffnungen aufgestaut wird und aufgrund des erhöhten Staudrucks dann kein Ansaugen eines Fluidstromes aus der unter dem Boden befindlichen Kammer erfolgt. In diesen Fällen erweist es sich als vorteilhaft, der Austrittsöffnung dieses Fluidstroms eine Abdeckung zuzuordnen, die einerseits eine gezielte Umlenkung des Treibstrahls ermöglicht und andererseits zusammen mit dem oberen Bodenbereich für den anzusaugenden Fluidstrom einen Strömungskanal bildet, an dessen Austrittsende aufgrund des vorbeiströmenden Treibstrahls ein entsprechend erniedrigter, die Ansaugung bewirkender Druck auftritt.

Entsprechendes gilt bei von unten nach oben durchströmter vertikaler Säule oder bei geneigter oder horizontaler Säulenanordnung. An die Stelle der verbindenden Einrichtung im oberen bzw. unteren Endbereich der Böden treten dann diejenigen im stromaufwärts bzw. stromabwärts gelegenen Endbereich der Böden. « Stromaufwärts » gelegen bedeutet in Verbindung mit den geneigten Böden, daß diese Bodenbereiche von einer angenommenen Parallelströmung mit über den Säulenquerschnitt konstanter Geschwindigkeitsverteilung früher erreicht werden als die nachfolgenden « stromabwärts » gelegenen Bodenbereiche.

Wie gefunden wurde, kommt es zur Ausbildung einer Quasi-Gleichgewichtsfläche zwischen dem zusammen mit dem angesaugten Fluid- oder Schlaufenstrom über die verbindende Einrichtung des stromabwärts gelegenen Endbereichs der Böden in die nächste Kammer eingeleiteten Treibstrahl und dem zumindest zunächst in der Kammer verbleibenden Volumenstrom. Die Gleichgewichtsfläche teilt also die Fluidteilchen ein in solche, welche sich stromabwärts von ihr befinden und demzufolge aus der Kammer ausgetragen werden, und in diejenigen, welche sich stromaufwärts von ihr befinden und in die innere Kreislaufströmung der Kammer bzw. den aus ihr abgesaugten Fluidstrom überführt werden. Bei dieser Betrachtung ist der Einfluß von Turbulenzen in der Gleichgewichtsfläche außer acht gelassen. Die Gleichgewichtsfläche ist vor dem stromabwärts gelegenen Endbereich der Böden im Abstand von diesen ausgebildet. Dieser Abstand und die Form der Gleichgewichtsfläche und ihre Ausdehnung richten sich insbesondere nach der Größe der vorgenannten Volumenströme. Ihre Krümmung kann — im Längsschnitt durch die stromab- und stromaufwärts gelegenen Endbereiche der Böden betrachtet — prinzipiell als ähnlich einem Hyperbel- oder Parabelausschnitt angegeben werden. Die Gleichgewichtsflächen können bei stationärem Betriebszustand als stabil angesehen werden. Bei sich ändern dem Betriebszustand kann sich ihr Abstand von den Böden, ihre Form und Größe in gewissen Grenzen ändern.

Für die in der Säule tatsächlich auftretende Rückvermischung zwischen benachbarten Umlaufkammern sind die Turbulenzen im Bereich dieser Gleichgewichtsflächen von entscheidender Bedeutung. Um sie zu vermeiden oder wenigstens zu vermindern, ist in zweckmäßiger Weiterbildung der Erfindung nach Anspruch 2 vorgesehen, am Ort dieser Gleichgewichtsflächen eine mechanische feste Trennwand zwischen den sich aufteilenden Volumenströmen anzuordnen. Die Trennwand ist bevorzugt ähnlich der Gleichgewichtsfläche gekrümmt ausgebildet, sie kann aber in vereinfachter Ausführungsform auch eben sein. Sie erstreckt sich bevorzugt von der an den stromabwärts gelegenen Endbereich der Böden angrenzenden Säulenwand ausgehend über etwa 1/10 bis 7/10 der Querschnittsabmessung der Säule, je nach den Betriebsbedingungen des Einzelfalles. Insbesondere erstreckt sie sich bis etwa zur Mitte der Säule. Um ggf. eine Anpassung an unterschiedliche Betriebszustände zu ermöglichen, kann in vorteilhafter Weise weiter vorgesehen werden, den Abstand zwischen Trennwand und Boden variierbar zu gestalten, indem z. B. die Trennwand in Längsrichtung der Säule verschiebbar ist. Weiterhin kann es sich als vorteilhaft erweisen, die Trennwand um einen an oder nahe der Säulenwand gelegenen Punkt verschwenkbar anzuordnen. Um ggf. eine gezielte Vermischung zwischen benachbarten Kammern zu erreichen, können die Trennwände mit Durchtrittsöffnungen versehen werden, deren Größe verstellbar sein kann.

Die Umlaufintensität und die Zusammensetzung des in der Schlaufe strömenden Fluids kann durch eine Änderung der Relation zwischen Treibstrahl und von diesem angesaugten Fluidstrom gesteuert werden, z. B. dadurch, daß der vom angesaugten Fluid- oder Schlaufenstrom zu überwindende Strömungswiderstand in der verbindenden Einrichtung im stromaufwärts gelegenen Endbereich der Böden bzw. in dem sich daran anschließenden mit Hilfe einer Abdeckung ausgebildeten Einleitkanal verändert wird. Dies kann konstruktiv in einfacher Weise z. B. durch von außen zu betätigende verdreh- oder verschiebbare Klappen, Platten od. dgl. erfolgen, die im Strömungsweg des angesaugten Fluidstroms angeordnet sind und auch während des laufenden Betriebs verstellbar sind. Diese einfachen Regeleinrichtungen können für jede Kammer separat, für mehrere zu einer Gruppe zusammengefaßte Kammern oder auch für alle Kammern der Säule gemeinsam verstellbar vorgesehen werden. Dadurch kann die Umlaufintensität in den Schlaufen je nach Bedarf für die einzelne Kammer, sektionsweise oder auch für die Gesamtheit der Säule eingestellt werden.

Die in ihrer Konstruktion einfachen, vorzugsweise ebenen, ggf. aber auch gekrümmten, abgewinkelten od. dgl. Böden können in der Säule verschiebbar angeordnet werden, z. B. an gemeinsamen durchgehenden Stangen. Eine absolute Dichtigkeit zwischen der Säulenwand und den Böden ist nicht unbedingt erforderlich. Dabei sind dann natürlich auch die anderen Einrichtungen wie z. B. Trennwände, Ablenkeinrichtungen und Regelklappen entsprechend verschiebbar anzuordnen.

Bei großen Reaktoren spielt die Wärmezu- oder -abfuhr eine bedeutende Rolle. Bei schlanken Reaktoren ist das Verhältnis von Wärmeaustauschfläche zu Volumen viel günstiger als bei normalen Rührbehältern, deren Schlankheitsgrad, d. h. das Verhältnis von Durchmesser zur Höhe aus fertigungs- und strömungstechnischen Gründen im allgemeinen zwischen etwa 1 zu 0,8 und 1 zu 2 liegt. Bei der erfindungsgemäßen Säulenkaskade ist wie bei anderen bekannten Säulenkaskaden dagegen der Schlankheitsgrad frei wählbar, ohne dass dabei fertigungs- oder strömungstechnische Nachteile in Kauf genommen werden müssen.

Die mit Durchlässen versehenen geneigten Böden erstrecken sich im allgemeinen — im Grundriß betrachtet — über das etwa 0,3 bis 0,95-fache der Säulenbreite, gemessen in dem durch die Durchlässe der Böden geführten Längsschnitt. Die jeweiligen Abmessungen richten sich nach den speziellen Erfordernissen des Einzelfalles. Die Größe der Durchlässe bzw. deren Strömungswiderstände bestimmen das Verhältnis der Volumenströme. Die relative Volumengröße des Wirbels oder der Kreislaufströmung und die Verweilzeit der Fluidteilchen darin sind konstruktiv beeinflußbar z. B. durch die Querschnittsabmessungen der Säule, die Durchlaßgröße der Böden, deren Neigungswinkel und Abstand voneinander. Die Querschnittsform der Säule kann kreisförmig, rechteckig, quadratisch od. dgl. sein.

Die Erfindung ist in der Zeichnung in Ausführungsbeispielen in unterschiedlichem Maßstab schematisch gezeigt und wird anhand dieser nachstehend noch näher erläutert. Es zeigen

Figur 1 eine vertikale Säule im Längsschnitt,

Figur 2 einen Ausschnitt daraus mit detaillierterer Darstellung der verschiedenen Volumenströme,

Figur 3 ein Modell der Schlaufenströmung und

Figur 4 einen Ausschnitt aus der Säule mit unterschiedlichen zusätzlichen Trennwänden oberhalb der Böden.

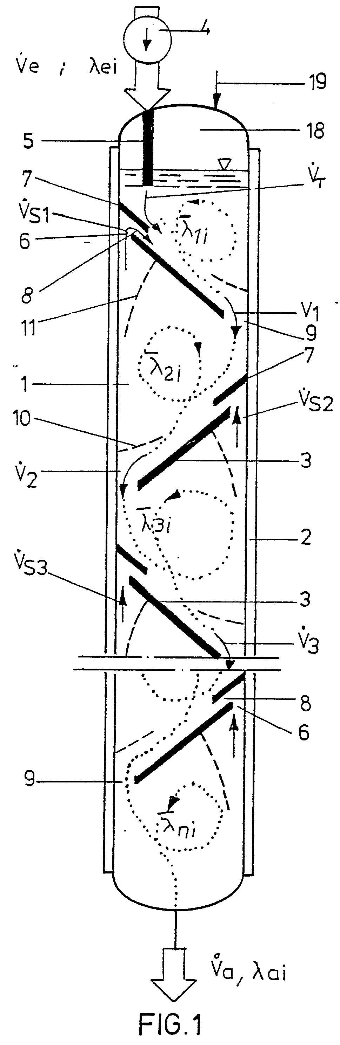

In Fig. 1 ist die Säulenkaskade 1 mit dem Heiz- oder Kühlmantel 2 im Längsschnitt gezeigt. In ihr sind die ebenen Böden 3 abwechselnd gegeneinander versetzt geneigt angeordnet. Am Kopf der Säule 1 wird der homogene Einsatzvolumenstrom $\dot{V}_e$ mit der Konzentration $\lambda_{ei}$ der Komponente i mittels der Pumpe 4 über das in die Flüssigkeit hineinragende Einleitrohr 5 unter Druck hineingeleitet.

Das Einleitrohr 5 ist außermittig praktisch über dem oberen Durchlaß 6 des obersten Bodens 3 angeordnet. Oberhalb des Durchlasses 6 ist die Abdeckung 7 derart angebracht, daß zwischen ihr und dem oberen Ende des Bodens 3 der Strömungskanal 8 ausgebildet ist. Mit dieser Anordnung ist gewährleistet, daß der aus dem Einleitrohr 5 austretende Treibstrahl $\dot{V}_T$, der gleich dem Einsatzstrom $\dot{V}_e$ ist, an der Abdeckung 7 bzw. dem Boden 3 derart umgelenkt wird, daß über den Strömungskanal 8 der Fluid- oder Schlaufenstrom $\dot{V}_{S1}$ angesaugt wird. In der obersten Umlaufkammer ergibt sich für die Komponente i die Konzentration $\lambda_{1i}$. Am unteren stromabwärts gelegenen Ende der Böden 3 ist der Durchlaß 9 ausgebildet, über den der Volumenstrom $\dot{V}_1$ in die darunter befindliche Umlaufkammer mit der Konzentration $\lambda_{2i}$ usw. tritt. Der von oben nach unten durch die Säule 1 hindurchgeleitete Volumenstrom ist durch die gepunktete Linie schematisch angedeutet. Am Fuß der Säule tritt er als Volumenstrom $\dot{V}_a$, dem Reaktionsprodukt mit der Konzentration $\lambda_{ai}$ aus. Die Gleichgewichtsflächen oberhalb des unteren Durchlasses 9 sind durch die gestrichelten Linien 10 angedeutet. Eine weitere Gleichgewichtsfläche ist durch die Linie 11 angedeutet, welche den in die Wirbelbewegung mit eingezogener Volumenstrom vom abgesaugten Volumenstrom $\dot{V}_{Si}$ trennt. Der Raum 18 oberhalb der Flüssigkeit der Säule 1 ist mit inertem Druckgas gefüllt, das über die Leitung 19 eingeleitet wird.

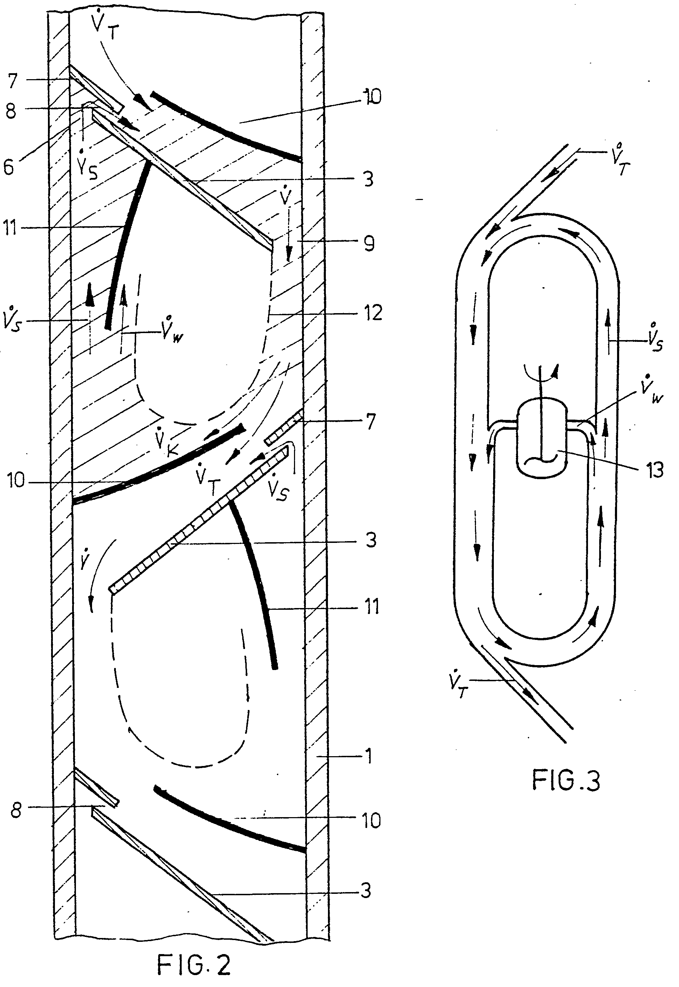

Fig. 2 zeigt in vergrößertem Maßstab zwei benachbarte Umlaufkammern der Säule 1, die auch hier von oben nach unten durchströmt wird. Der am oberen Boden 3 umgelenkte Treibstrahl $\dot{V}_T$, der nach oben durch die jetzt durchgezogen dargestellte Gleichgewichtsfläche 10 abgegrenzt ist nimmt den angesaugten Fluid- oder Schlaufenstrom $\dot{V}_S$ mit und tritt als Volumenstrom $\dot{V}$ in die nächste stromabwärts gelegene Umlaufkammer durch den unteren Durchlaß 9 ein, strömt entlang der Säulenwand nach unten und wird am nächsten Boden 3 wieder aufgeteilt in einem Treibstrahl $\dot{V}_T$ und einem Kreislaufstrom $\dot{V}_K$. Der letztere ist nach unten durch die Gleichgewichtsfläche 10 abgegrenzt, verbleibt also zunächst in dieser Umlaufkammer. Im Verlaufe seiner weiteren nach oben gerichteten Kreisströmung teilt er sich — gekennzeichnet durch die Gleichgewichtsfläche 11 — in den abzuführenden Volumenstrom $\dot{V}_S$ und den in die Wirbelbewegung eingezogenen Volumenstrom $\dot{V}_W$ auf. Der Strom $\dot{V}_S$ stellt den Schlaufenstrom dar, der über den Strömungskanal 8 abgesaugt wird, während der Wirbelstrom $\dot{V}_W$ zur Energieversorgung der zentralen Wirbelbewegung — angedeutet durch die nicht schraffierte zentrale Fläche — beiträgt. Im Austausch dafür tritt ein entsprechender nicht gezeigter Volumenstrom über die gestrichelt angedeutete Austauschlinie 12 in die Volumenströme $\dot{V}$ bzw. $\dot{V}_K$ über. In der nächsten stromabwärts gelegenen Umlaufkammer wiederholen sich dann diese Vorgänge.

Die Flüssigkeit strömt also in einer Schlaufe, die durch die Säulenwände, die beiden Gleichgewichtsflächen 10 und den oberen Boden 3 gebildet wird. Die Schlaufenströmungen der einzelnen Kammern werden demzufolge nicht durch die Böden der Säule voneinander getrennt, sondern durch die Gleichgewichtsflächen 10. Durch die eingebauten geneigten Böden mit Durchlässen an den Enden werden also schlaufenförmige Stromlinien erzeugt, in deren Mitte ein vertikaler Wirbel mit ständigem Zu- und Abfluß in die Schlaufenströmungen existiert. Die Böden dienen der Formgebung der Stromlinien, die Durchlässe der Steuerung der Ströme in den Kammern. Die Schlaufe ist durch die schraffierte Fläche im Inneren der Säule angedeutet.

Stellt man dieses Strömungsbild in einem physikalischen Modell dar, so ergibt sich ein Schlaufenreaktor nach Fig. 3, bei welchem der Schlaufenströmung $\dot{V}_S$ eine Verbindungsströmung $\dot{V}_W$ zugeordnet ist, in der ein Rührbehälter 13 eingeschaltet ist.

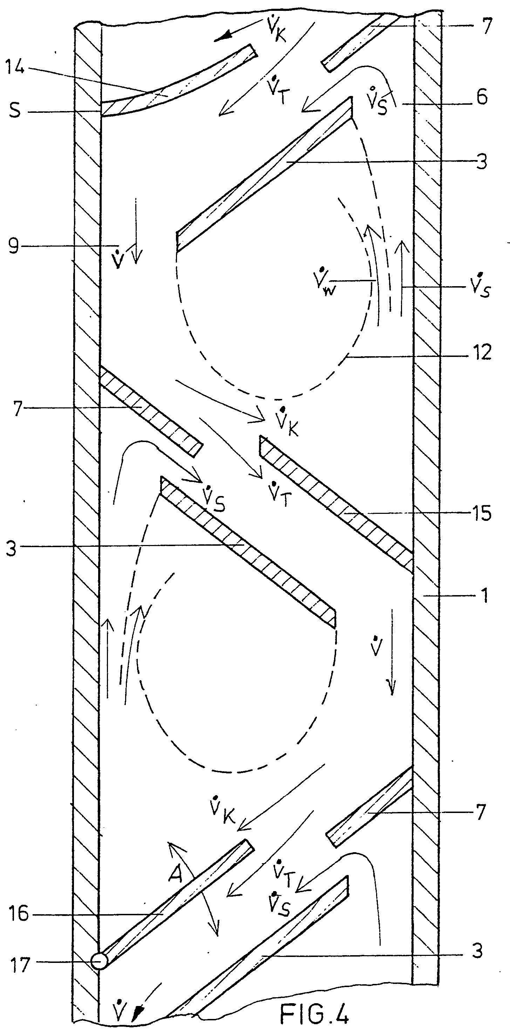

Fig. 4 unterscheidet sich von Fig. 2 dadurch, daß hier anstelle der Gleichgewichtsflächen 10 feste Trennwände 14 bis 16 vorgesehen sind. Die Trennwand 14 ist ähnlich der Gleichgewichtsfläche 10 gekrümmt und fest mit der Säule im Bereich des Staupunktes S der Ströme $\dot{V}_K$ und $\dot{V}_T$ + $\dot{V}_S$ angeordnet. Die Trennwand 15 ist als ebene feste Platte ausgebildet, während die Trennwand 16 um die Achse 17 entsprechend den Pfeilen A verschwenkbar angeordnet ist.

**Ansprüche**

1. Verwendung einer Säule mit im Abstand hintereinander und entgegengesetzt zueinander gegenüber der Längsachse der Säule (1) geneigt angeordneten Böden (3), die — in vertikaler Position der Säule betrachtet — im Bereich ihres unteren und oberen Endes wenigstens je eine den Raum oberhalb des Bodens mit demjenigen unterhalb des Bodens verbindende Einrichtung (6, 9) aufweisen, wobei der Fluidstrom mit Hilfe einer Pump-, Verdichtereinrichtung oder dgl. (4) durch die Säule hindurchgeführt und dieser Fluidstrom dem jeweils nachfolgenden Boden derart zugeleitet und an diesem umgelenkt wird, daß er als Treibstrahl an der stromaufwärts gelegenen verbindenden Einrichtung dieses Bodens die Ansaugung eines Fluidstromes aus der hinter diesem Boden befindlichen Kammer bewirkt als mehrstufige Säulenkaskade mit rührerlosen Umlaufkammern für homogene flüssige oder gasförmige Systeme.

2. Verwendung einer Säule nach Anspruch 1, dadurch gekennzeichnet, daß — in Durchströmrichtung der Säule (1) betrachtet — oberhalb der stromabwärts gelegenen verbindenden Einrichtung (9) eines Bodens (3) eine Trennwand (14, 15, 16) angeordnet ist, die zusammen mit dem Boden einen Strömungskanal für den der verbindenden Einrichtung zugeführten Treibstrahl nebst angesaugtem Fluidstrom bildet.

## Claims

1. Use of a column with plates (3) arranged behind one another at a distance and inclined opposite to one another with respect to the longitudinal axis of the column (1), which — viewed in the vertical position of the column — possess in the region of their lower and upper ends at least one arrangement (6, 9) connecting the space above the plate with that below the plate, with the fluid stream being led with the aid of a pump compressor arrangement or the like (4) through the column and this fluid stream being so conducted to the following plate and deflected that it brings about at the connecting passageway situated upstream of this plate, as a jet stream, the suction of a fluid stream from the chamber located behind this plate, as a multiple stage column cascade with circulation chambers without stirrers for homogeneous liquids or gaseous systems.

2. Use of a column according to claim 1, characterised in that — seen in the through-flow direction of the column (1) — there is arranged above the connecting passageway (9) situated downstream (3) of a plate (3) a separating wall (14, 15, 16) which together with the plate forms a flow channel for the jet stream supplied to the connecting passageway in addition to the fluid stream under suction.

## Revendications

1. Utilisation d'une colonne avec des fonds (3) disposés à une certaine distance les uns des autres inclinés de façon opposée les uns vis-à-vis des autres, le long de l'axe longitudinal de la colonne (1) qui, en regardant en position verticale de la colonne, aux alentours de leur extrémité supérieure et de leur extrémité inférieure présentent au moins un moyen de communication (6, 9) réunissant l'espace situé au-dessus du fond à celui situé en dessous du fond, de sorte que l'écoulement du fluide est conduit à l'aide d'une pompe, d'un compresseur ou analogue (4) à travers la colonne, cet écoulement de fluide étant amené à chaque fond suivant et y étant dévié de façon à provoquer en tant que jet de propulsion à l'endroit du moyen de communication disposé en amont sur ce fond, l'aspiration d'un écoulement de fluide hors de la chambre se trouvant derrière ce fond, en tant que colonnes montées en cascade à plusieurs étages avec chambre de circulation sans agitateur pour des systèmes liquides ou gazeux homogènes.

2. Utilisation d'une colonne selon la revendication 1, caractérisée en ce que, en considérant la direction d'écoulement de la colonne (1), au-dessus du moyen (9) de communication disposé en aval, d'un fond (3), est disposée une paroi de séparation (14, 15, 16), qui forme avec le fond, un canal d'écoulement pour le jet de propulsion amené au moyen de communication en plus de l'écoulement de fluide aspiré.

FIG.1

FIG. 2

FIG.3

FIG.4